# FASCICULE DE BREVET EUROPEEN

(11) **EP 0 537 087 B1**
(45) Date de publication et mention de la délivrance du brevet: **03.01.1996**
(21) Numéro de dépôt: 92420343.3
(22) Date de dépôt: 01.10.1992
(51) Int. Cl.: F16D 13/52, F16D 13/70

(54) **Embrayage à disques structuraux en particulier en carbone-carbone**
Kupplung mit Verbundscheiben, insbesondere aus Kohlenstoff-Kohlenstoff-Verbundwerkstoff
Clutch with structural discs, especially made of carbon-carbon composite

(30) Priorité: 09.10.1991 FR 9112431
(43) Date de publication de la demande: 14.04.1993
(73) Titulaire: CARBONE INDUSTRIE, Société Anonyme, F-93176 Bagnolet Cédex (FR)
(72) Inventeur: Prud'Homme, Guy, F-69110 Ste Foy-les-Lyon (FR)
(74) Mandataire: Dalsace, Michel

(56) Documents cités:
- DE-U- 8 533 270
- FR-A- 2 623 862
- FR-A- 2 662 766
- US-A- 4 466 524

## Description

La présente invention se rapporte à un embrayage à disques de friction structuraux, en particulier en carbone-carbone, comprenant:
- un volant moteur,
- un premier disque menant, réalisant une première interface non active entre lui et le volant,
- au moins un disque mené relié à un arbre de sortie, un disque menant étant éventuellement intercalé entre chaque paire adjacente éventuelle de disques menés,
- un deuxième disque menant,
- un plateau de pression, réalisant une deuxième interface non active entre lui et le deuxième disque menant,
- un couvercle comportant un mécanisme actionnable de poussée du plateau et pourvu de colonnettes logées dans des encoches radiales des disques menants et fixées au volant.

Les embrayages à friction carbone-carbone de ce type, tel que décrit dans le document de brevet FR-2 623 862 essentiellement utilisés actuellement dans des véhicules de compétition, présentent de nombreux avantages par rapport aux embrayages classiques, notamment une très bonne résistance aux fortes sollicitations, une faible usure sous forte sollicitation, une masse et une inertie réduites.

Cependant, ces embrayages posent un problème de libération de l'embrayage inférieure à celles des embrayages classiques à garnitures organiques.

En effet, deux disques menants structuraux supplémentaires, côté volant et côté plateau, sont nécessaires dans de tels embrayages, la friction n'opérant qu'aux interfaces carbone-carbone. Il en résulte deux jeux supplémentaires en position débrayée.

Si l'on considère l'exemple d'un embrayage monodisque classique, les interfaces de frottement étant fonte/matériau organique, le jeu se répartit en deux aux interfaces volant/disque mené et disque mené/plateau.

Dans le cas d'un embrayage à disques structuraux dit monodisque par analogie, le jeu se répartit en quatre aux interfaces volant/premier disque menant,premier disque menant/disque mené, disque mené/second disque menant et second disque menant/plateau.

A jeu total égal, il en résulte deux fois moins de jeu aux interfaces de frottement et en conséquence, une usure supplémentaire et un frottement résiduel menant à un débrayage non satisfaisant.

Le but de l'invention est de proposer un embrayage à disques structuraux qui, outre l'intérêt propre de ces disques qui est d'être réalisés d'une seule pièce et leurs capacités propres considérablement supérieures aux disques classiques, en particulier pour le carbone-carbone, présente un agencement dit de plaquage fiable et simple, tout en comportant un nombre limité de pièces constitutives qui permette une meilleure répartition du jeu.

Pour ce faire, conformément à l'invention, l'embrayage comprend un dispositif dit de plaquage assurant la suppression du jeu à au moins l'une des interfaces non actives et comportant un moyen de pression du disque menant contre la pièce adjacente.

Ainsi en position débrayée, le jeu se répartit uniformément aux interfaces actives des disques menants et des disques menés où il est plus important que dans les embrayages connus. La valeur de ces jeux est plus ou moins grande selon que le jeu des deux interfaces non actives ou seul celui d'une des deux interfaces non actives est supprimé.

Se référant au document de brevet FR-2 662 766 déposé le 31 mai 1990, le demandeur a procédé de sa propre initiative à une limitation et présenté des revendications séparées pour la France.

Selon un premier mode de réalisation, ce dispositif de plaquage comprend au moins une lame élastique métallique disposée entre le disque menant de l'interface et le disque menant le plus proche et dont l'extrémité active recourbée vient presser le disque de l'interface contre la pièce adjacente.

Selon une variante, le dispositif de plaquage comprend deux lames disposées contre les faces latérales de la colonnette.

Pour faciliter le montage, les deux lames élastiques peuvent être reliées par une lame centrale disposée contre la face intérieure de la colonnette.

Selon une autre variante, les colonnettes sont en forme de U présentant un orifice du côté de la pièce de l'interface, le disque menant présente deux encoches recevant les branches de la colonnette et la lame est disposée dans l'orifice et pousse le disque menant entre les encoches.

Pour assurer sa fixation, la lame peut être prolongée par un tronçon de lame disposé contre la face extérieure de la colonnette et pourvu d'un orifice recevant le moyen de fixation du couvercle sur le volant.

L'invention est décrite plus en détail ci-après à l'aide de figures représentant des modes de réalisation préférés.

La figure 1 est une vue partielle en perspective éclatée d'un embrayage multidisque à disques structuraux.

La figure 2 est une vue en perspective partielle d'un premier mode de réalisation d'un embrayage conforme à l'invention.

Les figures 3 et 4 sont des demi-vues en coupe d'un tel embrayage, en position débrayée et en position embrayée.

La figure 5 est une vue en perspective partielle d'un deuxième mode de réalisation d'un embrayage conforme à l'invention.

La figure 6 est une vue en perspective partielle d'un troisième mode de réalisation d'un embrayage conforme à l'invention.

La figure 7 est une demi-vue en coupe d'un tel embrayage, en position débrayée.

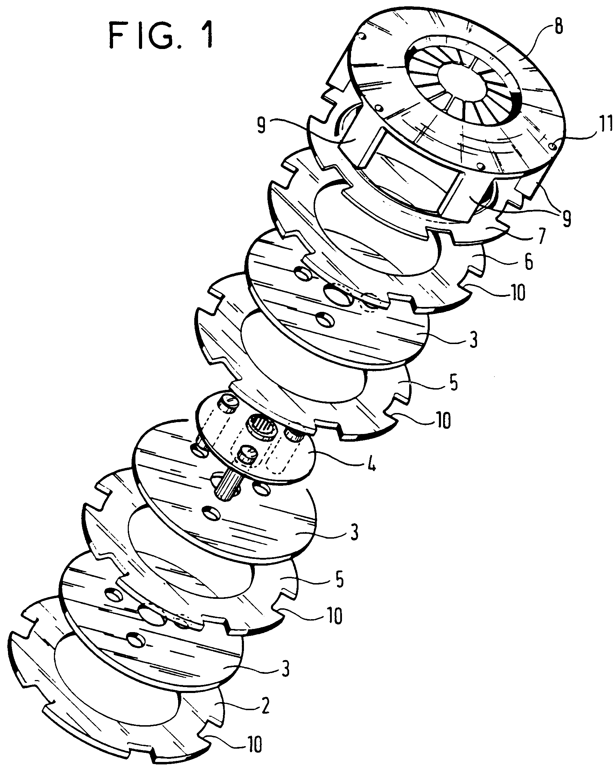

La figure 1 représente certaines pièces d'un embrayage connu dit tridisque (par analogie aux embrayages classiques à garnitures organiques). Sur le volant moteur, non représenté et qui se positionnerait à la partie inférieure de la figure, sont disposés un disque menant 2 dit premier disque menant, trois disques menés 3 reliés à un arbre de sortie par un moyeu 4, un disque menant 5 étant intercalé entre chaque paire de disques menés 3, un disque menant 6 dit deuxième disque menant, un plateau de pression 7 et un couvercle 8 comportant un mécanisme actionnable de poussée du plateau 7 et pourvu de colonnettes 9 logées dans des encoches radiales 10 des disques menants 2,3,6 et fixées au volant par une vis logée dans un alésage 11 de chaque colonnette 9 et vissée dans le volant. Les colonnettes 9 peuvent soit faire partie du couvercle 8, soit être fixées sur celui-ci par vissage ou autre.

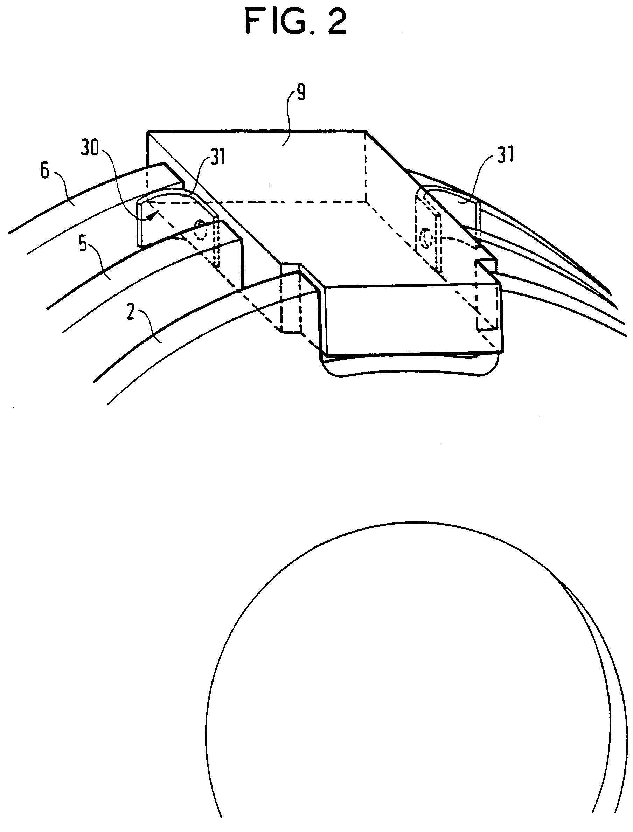

Une première variante est représentée sur les figures 2, 3 et 4. Sur la figure 2, pour plus de clarté, sont seuls représentés les disques menants 2,5,6 et une colonnette 9.

Un dispositif dit de plaquage 30 est constitué de deux lames élastiques métalliques disposées de chaque côté de la colonnette 9. L'extrémité de fixation de chaque lame est reliée par rivetage sur la face latérale de la colonnette 9, entre le deuxième disque menant 6 et le disque menant 5 le plus proche et son extrémité active recourbée d'environ 90° par rapport à l'extrémité de fixation vient presser le deuxième disque 6 contre le plateau 8.

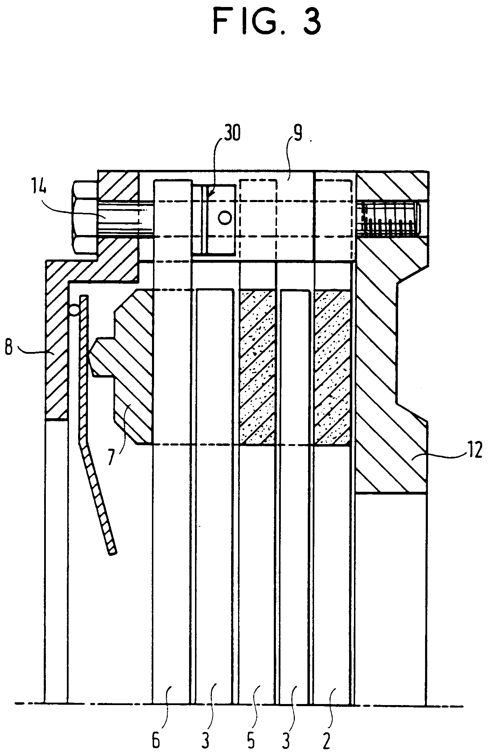

En position débrayée (figure 3), le jeu se répartit uniformément aux interfaces des disques menants 2,5,6 et des disques menés 3. Le jeu de l'interface plateau 7 - deuxième disque 6 est nul, puisque ce dernier est poussé contre le plateau 8 par les lames 30.

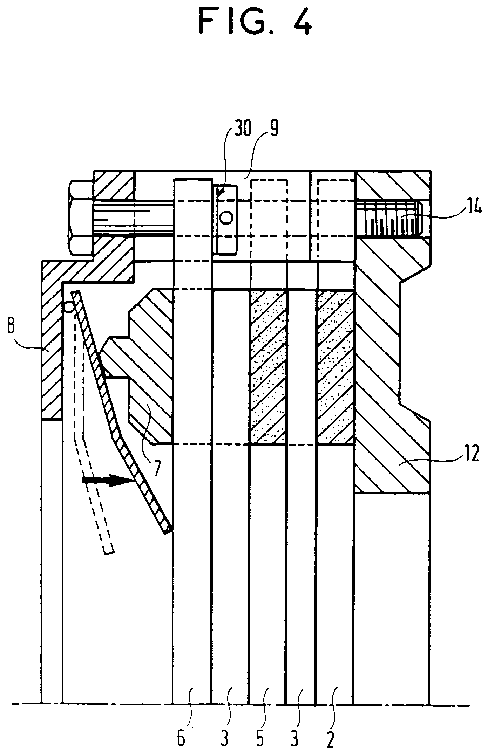

La figure 4 représente l'embrayage en position embrayée.

Grâce au dispositif 30, la répartition du jeu est maximalisé aux interfaces actives et il en résulte une meilleure libération au débrayage. De plus, la mise en compression ou embrayage se fait de façon parfaitement uniforme, sans interaction parasite au niveau des interfaces volant - premier disque menant et plateau - deuxième disque menant.

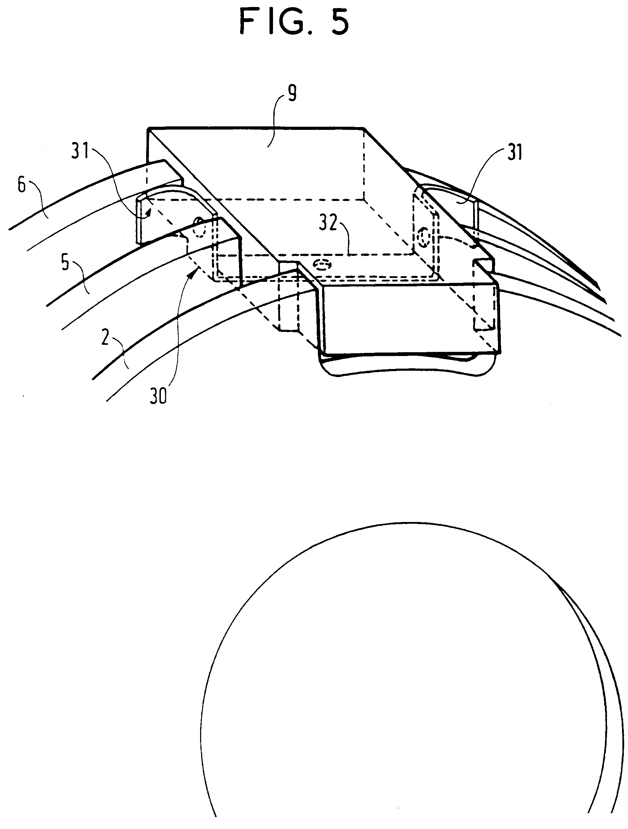

Une deuxième variante est représentée sur la figure 5.

Le dispositif de plaquage 30 est ici réalisé d'une pièce unique par pliage, les deux lames élastiques 31 étant reliées par une lame centrale 32 formant un U avec les parties planes des lames 31 placées contre les faces latérales de la colonnette 9. Cette lame 32 est disposée contre la face intérieure de la colonnette 9 et y est fixée par rivetage.

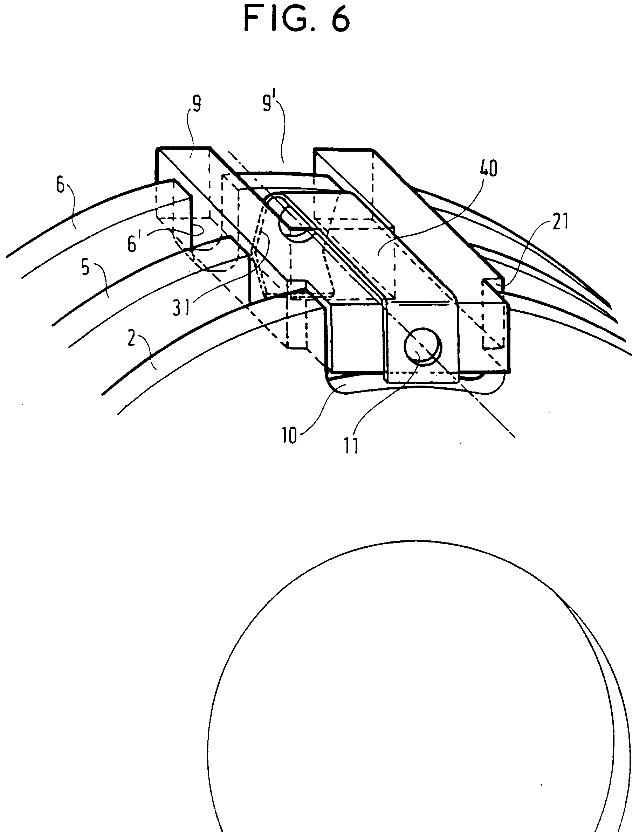

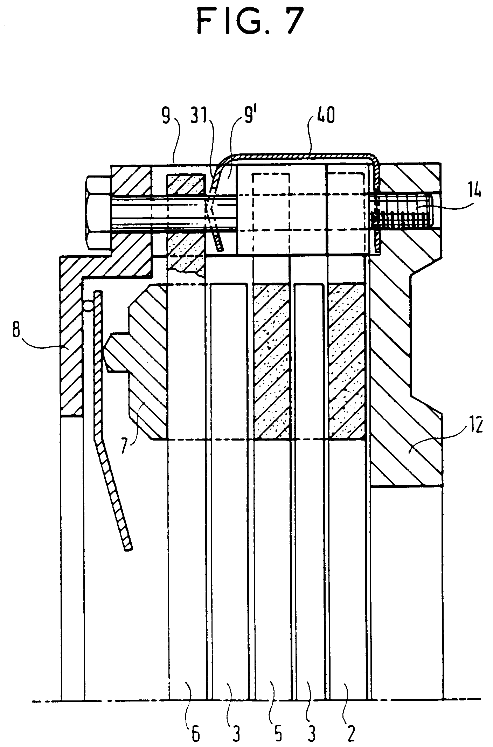

La variante représentée sur les figures 6 et 7 nécessite un agencement particulier de la colonnette 9 et du deuxième disque menant 6.

La colonnette 9 doit être une pièce séparée du couvercle fixée sur celui-ci. Elle est en forme de U et présente un orifice 9' du côté du couvercle.

Le deuxième disque menant 6 au lieu de l'encoche classique présente deux encoches 6' de plus petite dimension recevant les branches de la colonnette 9 en U. Un orifice de réception de la vis 14 est prévu entre ces deux encoches 6'.

Le dispositif de plaquage est constitué d'une lame pliée comportant un tronçon 40 disposé contre la face extérieure de la colonnette 9 et un tronçon 31 de plaquage formant une lame élastique recourbée poussant le deuxième disque menant 6 par sa partie se trouvant entre les encoches 6' et pourvu d'un orifice de passage de la vis 14.

L'adaptation de cette variante à un embrayage multidisque quelconque se fait par réglage de la longueur du tronçon de lame 40.

Les agencements décrits précédemment peuvent être montés sur toutes les colonnettes 9 de l'embrayage ou non. Les lames de plaquage doivent être suffisantes pour supprimer tout jeu entre le plateau et le deuxième disque.

De même bien que, dans les exemples décrits ci-dessus, le dispositif de plaquage soit monté dans l'interface plateau / deuxième disque menant, le dispositif de plaquage 30 représenté sur les figures 2 à 7 peut être monté entre le disque menant 6 et le plateau 7 et/ou entre le disque menant 2 et le volant 12.

## Revendications (Revendications pour l'(les) Etat(s) contractant(s) suivant(s): AT, BE, CH, DE, DK, ES, GB, GR, IE, IT, LI, LU, MC, NL, PT, SE)

1. Embrayage à disques de friction structuraux, en particulier en carbone-carbone comprenant:
- un volant moteur (12),
- un premier disque menant (2), réalisant une première interface non active entre lui et le volant (12),
- au moins un disque mené (3) relié à un arbre de sortie, un disque menant (5) étant éventuellement intercalé entre chaque paire adjacente éventuelle de disques menés (3),
- un deuxième disque menant (6),
- un plateau de pression (7), réalisant une deuxième interface non active entre lui et le deuxième disque menant (6),
- un couvercle (8) comportant un mécanisme actionnable de poussée du plateau (7) et pourvu de colonnettes (9) logées dans des encoches radiales (10) des disques menants (2,5,6) et fixées au volant (12),
embrayage caractérisé en ce qu'il comporte un dispositif dit de plaquage (30) assurant la suppression du jeu à au moins l'une des interfaces non actives et comportant un moyen de pression du disque menant (2,6) contre la pièce adjacente (7,12).

2. Embrayage selon la revendication 1, caractérisé en ce que le dispositif de plaquage (30) comprend au moins une lame élastique métallique (31) disposée entre le disque menant (2,6) de l'interface et le disque menant (5) le plus proche et dont l'extrémité active recourbée vient presser le disque (2,6) de l'interface contre la pièce adjacente (7,12).

3. Embrayage selon la revendication 2, caractérisé en ce que le dispositif de plaquage (30) comprend deux lames élastiques (31) dont l'extrémité de fixation est disposée contre les faces latérales de la colonnette (9).

4. Embrayage selon la revendication 3, caractérisé en ce que les deux lames élastiques (31) sont reliées par une lame centrale (32) disposée contre la face intérieure de la colonnette (9).

5. Embrayage selon la revendication 2, caractérisé en ce que les colonnettes (9) sont en forme de U présentant un orifice (9') du côté de la pièce (7,12) de l'interface, le disque menant (2,6) présente deux encoches (6') recevant les branches de la colonnette (9) et la lame (31) est disposée dans l'orifice (9') et pousse le disque menant (2,6) entre les encoches (6').

6. Embrayage selon la revendication 5, caractérisé en ce que la lame (31) est prolongée par un tronçon de lame (40) disposé contre la face extérieure de la colonnette (9) et pourvu d'un orifice recevant le moyen de fixation du couvercle (8) sur le volant (12).

## Revendications (Revendications pour l'(les) Etat(s) contractant(s) suivant(s): FR)

1. Embrayage à disques de friction structuraux, en particulier en carbone-carbone comprenant:
- un volant moteur (12),
- un premier disque menant (2), réalisant une première interface non active entre lui et le volant (12),
- au moins un disque mené (3) relié à un arbre de sortie, un disque menant (5) étant éventuellement intercalé entre chaque paire adjacente éventuelle de disques menés (3),
- un deuxième disque menant (6),
- un plateau de pression (7), réalisant une deuxième interface non active entre lui et le deuxième disque menant (6),
- un couvercle (8) comportant un mécanisme actionnable de poussée du plateau (7) et pourvu de colonnettes (9) logées dans des encoches radiales (10) des disques menants (2,5,6) et fixées au volant (12),
embrayage comportant un dispositif dit de plaquage (30) assurant la suppression du jeu à au moins l'une des interfaces non actives et comportant un moyen de pression du disque menant (2,6) contre la pièce adjacente (7,12), caractérisé en ce que le dispositif de plaquage (30) comprend au moins une lame élastique métallique (31) disposée entre le disque menant (2,6) de l'interface et le disque menant (5) le plus proche et dont l'extrémité active recourbée vient presser le disque (2,6) de l'interface contre la pièce adjacente (7,12).

2. Embrayage selon la revendication 1, caractérisé en ce que le dispositif de plaquage (30) comprend deux lames élastiques (31) dont l'extrémité de fixation est disposée contre les faces latérales de la colonnette (9).

3. Embrayage selon la revendication 2, caractérisé en ce que les deux lames élastiques (31) sont reliées par une lame centrale (32) disposée contre la face intérieure de la colonnette (9).

4. Embrayage selon la revendication 1, caractérisé en ce que les colonnettes (9) sont en forme de U présentant un orifice (9') du côté de la pièce (7,12) de l'interface, le disque menant (2,6) présente deux encoches (6') recevant les branches de la colonnette (9) et la lame (31) est disposée dans l'orifice (9') et pousse le disque menant (2,6) entre les encoches (6').

5. Embrayage selon la revendication 4, caractérisé en ce que la lame (31) est prolongée par un tronçon de lame (40) disposé contre la face extérieure de la colonnette (9) et pourvu d'un orifice recevant le moyen de fixation du couvercle (8) sur le volant (12).

## Patentansprüche (Patentansprüche für folgende(n) Vertragsstaat(en): AT, BE, CH, DE, DK, ES, GB, GR, IE, IT, LI, LU, MC, NL, PT, SE)

1. Kupplung mit strukturellen Reibungsscheiben, insbesondere auf Karbon-Karbon-Basis,
- mit einem motorseitigen Schwungrad (12),
- mit einer ersten Antriebsscheibe (2), die einen ersten nicht aktiven Übergang zwischen sich und dem Schwungrad (12) bildet,
- mit mindestens einer angetriebenen Scheibe (3), die mit einer Ausgangswelle verbunden ist, wobei ggf. eine Antriebsscheibe (5) zwischen jedem eventuellen benachbarten Paar von angetriebenen Scheiben (3) liegt,
- mit einer zweiten Antriebsscheibe (6),
- mit einer Anpreßplatte (7), die einen zweiten nicht aktiven Übergang zwischen sich und der zweiten Antriebsscheibe (6) bildet,
- und mit einem Deckel (8), der einen Betätigungsmechanismus zum Anpressen der Platte (7) sowie Säulen (9) enthält, die in radialen Nuten (10) der Antriebsscheiben (2, 5, 6) liegen und am Schwungrad (12) befestigt sind, dadurch gekennzeichnet, daß die Kupplung eine Anpreßvorrichtung (30) enthält, die den Abstand an mindestens einem der nicht aktiven Übergänge beseitigt und ein Mittel zum Anpressen der Antriebsscheibe (2, 6) an das benachbarte Bauteil (7, 12) enthält.

2. Kupplung nach Anspruch 1, dadurch gekennzeichnet, daß die Anpreßvorrichtung (30) mindestens eine elastische Metallamelle (31) enthält, die zwischen der Antriebsscheibe (2, 6) des Übergangs und der nächstliegenden angetriebenen Scheibe (5) liegt und deren aktives gekrümmtes Ende die Scheibe (2, 6) des Übergangs gegen das benachbarte Bauteil (7, 12) drückt.

3. Kupplung nach Anspruch 2, dadurch gekennzeichnet, daß die Anpreßvorrichtung (30) zwei elastische Lamellen (31) enthält, deren Befestigungsende an den Außenseiten der Säule (9) anliegt.

4. Kupplung nach Anspruch 3, dadurch gekennzeichnet, daß die beiden elastischen Lamellen (31) über eine zentrale Lamelle (32) miteinander verbunden sind, die an der Innenseite der Säule (9) liegt.

5. Kupplung nach Anspruch 2, dadurch gekennzeichnet, daß die Säulen (9) U-förmig ausgebildet sind und eine Öffnung (9') auf der Seite des Bauteils (7, 12) des Übergangs besitzen, und daß die Antriebsscheibe (2, 6) zwei Nuten (6') aufweist, in der die Zweige der Säule (9) liegen, während die Lamelle (31) in der Öffnung (9') liegt und die Antriebsscheibe (2, 6) zwischen die Nuten (6') drückt.

6. Kupplung nach Anspruch 5, dadurch gekennzeichnet, daß die Lamelle (31) durch einen Lamellenabschnitt (40) verlängert ist, der an der Außenseite der Säule (9) liegt und eine Öffnung für das Befestigungsmittel des Deckels auf dem Schwungrad (12) besitzt.

## Patentansprüche (Patentansprüche für folgende(n) Vertragsstaat(en): FR)

1. Kupplung mit strukturellen Reibungsscheiben, insbesondere auf Karbon-Karbon-Basis,
- mit einem motorseitigen Schwungrad (12),
- mit einer ersten Antriebsscheibe (2), die einen ersten nicht aktiven Übergang zwischen sich und dem Schwungrad (12) bildet,
- mit mindestens einer angetriebenen Scheibe (3), die mit einer Ausgangswelle verbunden ist, wobei ggf. eine Antriebsscheibe (5) zwischen jedem eventuellen benachbarten Paar von angetriebenen Scheiben (3) liegt,
- mit einer zweiten Antriebsscheibe (6),
- mit einer Anpreßplatte (7), die einen zweiten nicht aktiven Übergang zwischen sich und der zweiten Antriebsscheibe (6) bildet,
- und mit einem Deckel (8), der einen Betätigungsmechanismus zum Anpressen der Platte (7) sowie Säulen (9) enthält, die in radialen Nuten (10) der Antriebsscheiben (2, 5, 6) liegen und am Schwungrad (12) befestigt sind, wobei die Kupplung eine Anpreßvorrichtung (30) enthält, die den Abstand an mindestens einem der nicht aktiven Übergänge beseitigt und ein Mittel zum Anpressen der Antriebsscheibe (2, 6) an das benachbarte Bauteil (7, 12) enthält, dadurch gekennzeichnet, daß die Anpreßvorrichtung (30) mindestens eine elastische Metallamelle (31) enthält, die zwischen der Antriebsscheibe (2, 6) des Übergangs und der nächstliegenden angetriebenen Scheibe (5) liegt und deren aktives gekrümmtes Ende die Scheibe (2, 6) des Übergangs gegen das benachbarte Bauteil (7, 12) drückt.

2. Kupplung nach Anspruch 1, dadurch gekennzeichnet, daß die Anpreßvorrichtung (30) zwei elastische Lamellen (31) enthält, deren Befestigungsende an den Außenseiten der Säule (9) anliegt.

3. Kupplung nach Anspruch 2, dadurch gekennzeichnet, daß die beiden elastischen Lamellen (31) über eine zentrale Lamelle (32) miteinander verbunden sind, die an der Innenseite der Säule (9) liegt.

4. Kupplung nach Anspruch 1, dadurch gekennzeichnet, daß die Säulen (9) U-förmig ausgebildet sind und eine Öffnung (9') auf der Seite des Bauteils (7, 12) des Übergangs besitzen, und daß die Antriebsscheibe (2, 6) zwei Nuten (6') aufweist, in der die Zweige der Säule (9) liegen, während die Lamelle (31) in der Öffnung (9') liegt und die Antriebsscheibe (2, 6) zwischen die Nuten (6') drückt.

5. Kupplung nach Anspruch 4, dadurch gekennzeichnet, daß die Lamelle (31) durch einen Lamellenabschnitt (40) verlängert ist, der an der Außenseite der Säule (9) liegt und eine Öffnung für das Befestigungsmittel des Deckels auf dem Schwungrad (12) besitzt.

## Claims (Claims for the following Contracting State(s): AT, BE, CH, DE, DK, ES, GB, GR, IE, IT, LI, LU, MC, NL, PT, SE)

1. A clutch with structural friction plates, especially of carbon-carbon, comprising:
a drive flywheel (12),
a first driving plate (2) forming a first non-active interface with the flywheel (12),
at least one driven plate (3) connected to an output shaft, a driving plate (5) possibly being interposed between each possibly adjacent pair of driven plates (3),
a second driving plate (6),
a thrust plate (7) forming a second non-active interface with the second driving plate (6),
a casing (8) with a mechanism operable to apply pressure to the thrust plate (7) and provided with bars (9) fitted into radial recesses (10) of the driving plates (2, 5, 6) and fixed to the flywheel (12),
the clutch being characterized in that it includes a "packing-up" device (30) eliminating the play at at least one of the non-active interfaces and comprising means pressing the driving plate (2, 6) against the adjacent part (7, 12).

2. A clutch according to claim 1, characterized in that the packing-up device (30) comprises at least one resilient metal tongue (31) located between the driving plate (2, 6) of the interface and the next adjacent driving plate (5), and of which the operative curved end presses the plate (2, 6) of the interface against the adjacent part (7, 12).

3. A clutch according to claim 2, characterized in that the packing-up device (30) comprises two resilient tongues (31) whose attachment ends are located against the side faces of the bar (9).

4. A clutch according to claim 3, characterized in that the two resilient tongues (31) are connected by a central strip (32) located against the inner face of the bar (9).

5. A clutch according to claim 2, characterized in that the bars (9) are U-shaped with an opening (9') on the side of the part (7, 12) of the interface, the driving plate (2, 6) having two recesses (6') receiving the limbs of the bar (9) and the tongue (31) being located in the opening (9') and pressing against the driving plate (2, 6) between the recesses (6').

6. A clutch according to claim 5, characterized in that the tongue (31) is extended by a tongue part (40) located against the outer face of the bar (9) and provided with a hole receiving the means attaching the casing (8) to the flywheel (12).

## Claims (Claims for the following Contracting State(s): FR)

1. A clutch with structural friction plates, especially of carbon-carbon, comprising:
a drive flywheel (12),
a first driving plate (2) forming a first non-active interface with the flywheel (12),
at least one driven plate (3) connected to an output shaft, a driving plate (5) possibly being interposed between each possibly adjacent pair of driven plates (3),
a second driving plate (6),
a thrust plate (7) forming a second non-active interface with the second driving plate (6),
a casing (8) with a mechanism operable to apply pressure to the thrust plate (7) and provided with bars (9) fitted into radial recesses (10) of the driving plates (2, 5, 6) and fixed to the flywheel (12),
the clutch including a "packing-up" device (30) eliminating the play at at least one of the non-active interfaces and comprising means pressing the driving plate (2, 6) against the adjacent part (7, 12), the clutch being characterized in that the packing-up device (30) comprises at least one resilient metal tongue (31) located between the driving plate (2, 6) of the interface and the next adjacent driving plate (5), and of which the operative curved end presses the plate (2, 6) of the interface against the adjacent part (7, 12).

2. A clutch according to claim 1, characterized in that the packing-up device (30) comprises two resilient tongues (31) whose attachment ends are located against the side faces of the bar (9).

3. A clutch according to claim 2, characterized in that the two resilient tongues (31) are connected by a central strip (32) located against the inner face of the bar (9).

4. A clutch according to claim 1, characterized in that the bars (9) are U-shaped with an opening (9') on the side of the part (7, 12) of the interface, the driving plate (2, 6) having two recesses (6') receiving the limbs of the bar (9) and the tongue (31) being located in the opening (9') and pressing against the driving plate (2, 6) between the recesses (6').

5. A clutch according to claim 4, characterized in that the tongue (31) is extended by a tongue part (40) located against the outer face of the bar (9) and provided with a hole receiving the means attaching the casing (8) to the flywheel (12).
